Europäisches Patentamt

European Patent Office

Office européen des brevets

(11) Numéro de publication: **0 312 419**
**A1**

## (12) DEMANDE DE BREVET EUROPEEN

(21) Numéro de dépôt: 88402438.1

(22) Date de dépôt: 27.09.88

(51) Int. Cl.⁴: **C 04 B 35/58**

(30) Priorité: 14.10.87 FR 8714217

(43) Date de publication de la demande:
19.04.89 Bulletin 89/16

(84) Etats contractants désignés:
AT BE CH DE ES FR GB GR IT LI LU NL SE

(71) Demandeur: **ASSOCIATION POUR LA RECHERCHE ET LE DEVELOPPEMENT DES METHODES ET PROCESSUS INDUSTRIELS (ARMINES)**
**60, Boulevard Saint-Michel**
**F-75272 Paris Cédex 06 (FR)**

(72) Inventeur: **Broussaud, Daniel**
**1 Résidence du Grimpré**
**F-91140 Villebon Sur Yvette (FR)**

**Sachet, Jean Paul**
**5 Rue de la Vierge**
**F-91440 Bures Sur Yvette (FR)**

(74) Mandataire: **Bérogin, Francis et al**
**CABINET HARLE & PHELIP 21, rue de la Rochefoucauld**
**F-75009 Paris (FR)**

(54) Matériau céramique à haute conductivité thermique, son procédé de fabrication, et ses applications, notamment dans l'industrie électronique.

(57) La composition utilisable pour la fabrication d'un matériau céramique est constituée essentiellement par un mélange intime de poudres, comprenant, pour 100 parties en poids (p.p.) : du nitrure d'aluminium à raison de 85 à 99,5 p.p. ; et au moins un additif de frittage choisi parmi les oxydes de terres rares et de métaux alcalino-terreux et les substances fournissant de tels oxydes par décomposition thermique, ce (ou ces) additif(s) étant présent(s) à raison de 0,5 à 15 p.p. d'équivalents en oxydes, le mélange renfermant aussi, pour 100 p.p., une quantité de carbure de silicium inférieure à 3 p. p., la conductivité thermique du matériau céramique résultant étant au moins égale à 130 W/m·K. Ce matériau est utilisable dans l'industrie électronique, pour l'encapsulation de circuits intégrés et comme substrats de support pour les circuits intégrés, ainsi que, dans le domaine mécanique, comme matériau permettant une évacuation de calories.

FIGURE UNIQUE

EP 0 312 419 A1

Bundesdruckerei Berlin

Description

**Matériau céramique à haute conductivité thermique, son procédé de fabrication et ses applications notamment dans l'industrie électronique.**

La présente invention porte sur un matériau céramique présentant une conductibilité thermique très supérieure à celle de l'alumine, afin de remplacer avantageusement celle-ci dans l'industrie électronique, notamment pour la constitution de substrats de circuits électroniques et l'encapsulation de composants électroniques, sans présenter les inconvénients de l'oxyde de béryllium qui est connu pour ce type d'application, mais qui, étant extrêmement toxique sous forme de poudre, ne peut être manipulé qu'avec des précautions particulières, en faisant un produit très cher. La présente invention porte également sur un procédé de fabrication de ce matériau céramique à haute conductivité thermique, ainsi que sur ses applications, notamment dans l'industrie électronique..

Le matériau céramique de la présente invention n'est toutefois pas limité aux applications du domaine de l'électronique ; en effet, ce matériau peut avoir des applications dans le domaine mécanique, dès lors qu'il se pose de problèmes d'évacuation de calories, car il présente de bonnes propriétés de résistance au choc thermique.

On indiquera ci-après les spécifications qu'un matériau céramique devrait respecter pour être jugé satisfaisant dans les applications indiquées ci-dessus du domaine de l'électronique.

Propriétés électriques
- une résistance électrique de l'ordre de $10^{10}$ ohms ;
- une rigidité diélectrique supérieure à 10 KV/mm ;
- une valeur de tangente $\delta$ inférieure à $10^{-3}$ ;
- une constante diélectrique inférieure ou égale à 10.

Propriétés physiques
- une conductibilité thermique supérieure à 130 W/m °K, soit au moins environ 6 fois la conductibilité thermique de l'alumine ;
- un coefficient de dilatation thermique compris entre 3 et 5 x $10^{-6}$/°C.
- une résistance à la rupture supérieure ou égale à 200 N/mm$^2$ ;
- une planéité inférieure à 20 μm/cm ;
- une rugosité généralement comprise entre 0,4 et 1 μRa selon les applications :
- une usinabilité permettant notamment de le prédécouper, le découper et le percer, par exemple, par un faisceau laser, sans précautions particulières pour la sécurité de l'opérateur ;
- une absence de porosité ouverte.

Propriétés chimiques
- le matériau ne doit pas être sensible à l'humidité, c'est-à-dire qu'il ne doit ni absorber l'humidité ni subir une corrosion par suite à l'humidité ;
- il doit être inerte vis-à-vis des solvants utilisés couramment dans le domaine de l'électronique.

Egalement, il convient que le matériau puisse subir, sans altération ni déformation, plusieurs cuissons à des températures de 850°C à 980°C, en technologie des films épais. Le matériau ne doit pas dégazer sous vide et être résistant aux agents de gravure en technologie des films minces.

Comme indiqué ci-dessus, le matériau le plus utilisé actuellement dans le domaine des hybrides et de l'encapsulation des composants électroniques est l'alumine à teneur supérieure à 90% en $Al_2O_3$, l'oxyde de béryllium, présentant une excellente conductibilité thermique, étant, vu son coût, réservé à des applications très spécifiques. L'alumine est un excellent isolant électrique avec une faible perte diélectrique et il a une bonne tenue mécanique; il présente cependant l'inconvénient d'être mauvais conducteur thermique.

En revanche, le nitrure d'aluminium présente une conductivité thermique élevée, avec un coefficient de dilatation thermique inférieur à celui de l'alumine, et ses propriétés électriques, toutefois moins bonnes que celles de l'alumine, restent cependant acceptables. Pour ces raisons, il commence, à l'heure actuelle, à être proposé, à l'état fritté avec différents additifs de frittage comme l'oxyde d'yttrium, pour constituer des substrats pour haute puissance, par suite de sa conductibilité thermique, de sa résistance mécanique, de son bon isolement électrique, de son coefficient de dilatation voisin de celui du silicium. Les brevets européens n° 0 147 101, n° 0 166 073 et n° 0 180 724, ainsi que les brevets américains n° 4 578 232, n° 4 578 233 et n° 4 578 364 illustrent l'avancement des recherches dans ce domaine.

La présente invention apporte un perfectionnement à ces matériaux céramiques à base AlN + additif de frittage, consistant en une amélioration supplémentaire de leur conductivité thermique. Ce résultat est atteint par l'addition, à la composition de base, d'une quantité relativement faible de carbure de silicium.

La présente invention a donc d'abord pour objet une composition utilisable pour la fabrication d'un matériau céramique à haute conductivité thermique, constituée essentiellement par un mélange intime de poudres, qui comprend, pour 100 parties en poids :
- du nitrure d'aluminium à raison de 85 à 99,5 parties en poids ; et
- au moins un additif de frittage choisi parmi les oxydes de terres rares et de métaux alcalino-terreux et les substances fournissant de tels oxydes par décomposition thermique, ce (ou ces) additif(s) étant présent(s) à raison de 0,5 à 15 parties en poids d'équivalents en oxydes,
ledit mélange refermant en outre, pour 100 parties en poids, une quantité de carbure de silicium inférieure à 3 parties en poids, la conductivité thermique du matériau céramique fabriqué à partir de ladite composition étant au moins égale à 130 W/m•K.

De préférence, le carbure de silicium est présent à raison de 0,05 à 2 parties en poids pour 100 parties en poids du mélange de base.

La poudre de carbure de silicum peut se présenter suivant l'une ou l'autre de ses deux formes cristallographiques, à savoir la forme α (système hexagonal) ou β (système cubique) ; elle peut également se présenter sous la forme d'un mélange de ces deux espèces.

Quant à l'additif de frittage, il consistera, de préférence, en oxyde d'yttrium. Comme autres additifs de frittage que l'on pourrait le cas échéant utiliser, on peut mentionner $YF_2$, $CaO$, $CaCO_3$, $CaN_2$, $BaO$ et $BaCO_3$.

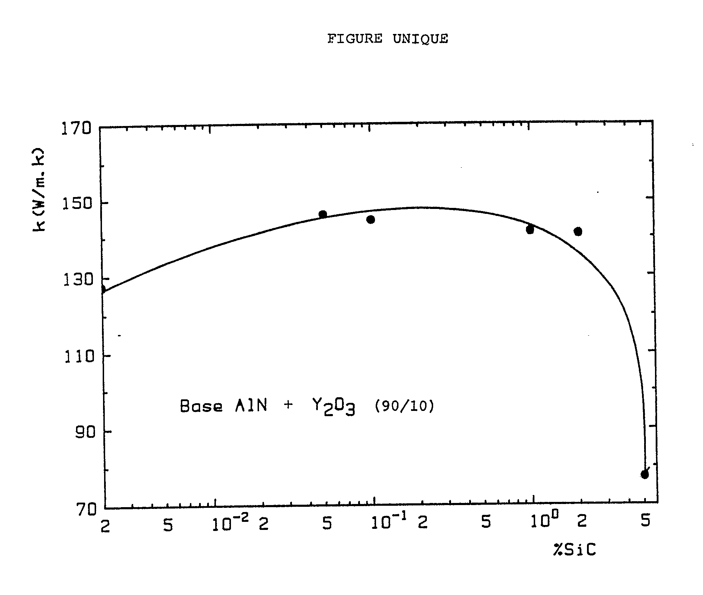

On connaît, par le brevet américain n° 3 833 389, un matériau composite formé par frittage d'un mélange d'AIN pulvérulent, d'un second composant pulvérulent pouvant être $Y_2O_3$ et d'un troisième composant pouvant être SiC. Le but de l'addition de SiC est d'obtenir un renforcement mécanique et une résistance aux chocs thermiques du matériau composite obtenu. Si l'on se reporte à l'Exemple 1, tableau I, de ce brevet américain, on voit qu'ont été testées les valeurs de 0, 5, 10, 20, 30 et 50% en volume de poudre de carbure de silicium, et que l'effet recherché commence à être intéressant à partir de 20% en volume. Selon la présente invention, l'objectif à atteindre est différent puisqu'on vise à augmenter la conductivité thermique. On sait en effet que la conductivité thermique n'est pas directement corrélée à la résistance aux chocs thermiques. Cet objectif est atteint, selon la présente invention, d'une façon inattendue, par une addition de SiC inférieure à 3% en poids (voir figure unique du dessin annexé), cette plage de pourcentages de SiC n'ayant pas été exploitée selon le brevet américain précité. Par ailleurs, les particules de SiC mises en jeu selon l'invention ont une dimension moyenne généralement comprise entre 0, 1 et 3 µm, de préférence, inérieure au micron, alors que les particules de SiC utilisées conformément à ce brevet américain peuvent présenter une dimension plus importante, allant jusqu'à 40 µm.

La demande de brevet européen n° 80 213 décrit une matière céramique hautement conductrice de la chaleur, comprenant SiC, AIN, et au moins l'un parmi CaO, BaO, et SrO, avec plus de zéro jusqu'à 85% en poids de SiC, 0, 1 à 5% en poids d'au moins l'un desdits oxydes, le complément étant constitué par AIN. Les faibles teneurs en SiC n'ont pas été exploitées, et l'on constate en examinant le tableau 1 de ce document une valeur de conductivité thermique de 105 W/m·K pour une composition $SiC/AIN/CaCO_3$ dans un rapport 70/28/2 en poids, et une valeur correspondante de 55 W/m·K dans le cas de $AIN/CaCO_3$ dans un rapport 99/1 en poids. La présente invention a véritablement permis de mettre en évidence l'effet remarquable sur la conductivité thermique, dans le cas d'une base AIN, de l'addition de SiC dans un pourcentage inférieur ou égal à 3% par rapport à la composition AIN/additif de frittage. En effet, la conductivité thermique des matériaux céramiques de l'invention est toujours au moins égale à 130 W/m·K.

La présente invention a également pour objet un procédé pour la fabrication d'un matériau céramique à partir de la composition telle que définie ci-dessus, ce procédé consistant :
- à préparer un mélange intime de poudres de départ de la composition susindiquée, dans un milieu de suspension liquide organique compatible avec ces poudres, en faisant suivre, le cas échéant, par un séchage ;
- à réaliser une mise en forme de ce mélange, alors qu'il se trouve à l'état de suspension ou bien d'extrait sec ; et
- à soumettre à une cuisson le mélange ainsi mis en forme, dans une atmosphère protectrice empêchant la décomposition du nitrure d'aluminium, à une température capable de provoquer le frittage des poudres de la composition pour donner produit homogène résistant.

Le milieu de supension utilisé à la première étape sera choisi avantageusement parmi les alcools, comme le méthanol et le propanol, et l'acétone.

Par ailleurs, à la première étape, on peut incorporer au mélange de la composition pulvérulente et du milieu de suspension, un liant soluble dans ledit milieu de suspension et capable de subir une décomposition thermique ultérieure, notamment lors du frittage, sans laisser de résidu. De tels liants sont courants dans l'industrie des céramiques et peuvent être choisis notamment parmi l'éthylcellulose, l'alcool polyvinylique, les résines acryliques et le polyéthylèneglycol.

Le séchage de la première étape est un séchage de type classique, notamment par atomisation ou granulation.

La mise en forme de la seconde étape est également une opération classique dans l'industrie des céramiques ; elle pourra être effectuée, par exemple, par coulage, pressage, extrusion-injection.

Par ailleurs, pour constituer l'atmosphère protectrice empêchant la décomposition du nitrure d'aluminium lors du frittage, on peut ou bien effectuer cette opération de frittage dans un lit de poudre protecteur, notamment un lit de nitrure d'aluminium, en travaillant en atmosphère azotée, ou bien, selon une variante, on peut conduire l'opération de frittage sous une pression d'azote pouvant atteindre quelques mégapascals.

L'atmosphère azotée indiquée ci-dessus est constituée par exemple par de l'azote, par un mélange d'argon et d'azote, ou bien par du gaz ammoniac dissocié.

Le frittage est effectué dans les conditions habituelles de température (de l'ordre de 1750°C à 2000°C) et de temps (de l'ordre de 1 heure à 4 heures de palier).

La présente invention a également pour objet le matériau céramique obtenu à partir de la composition telle que définie ci-dessus, ou obtenu par le procédé tel que défçini ci-dessus, et dont la conductivité thermique est au moins égale à 130 W/m.K ; ce matériau comporte une phase de nitrure d'alumium et une phase intergranulaire résultant de la réaction entre l'additif de frittage et les grains de nitrure d'aluminium, le carbure de silicium se trouvant au sein du matériau, soit en phase individualisée, soit en solution solide.

Le matériau céramique de la présente invention est donc un matériau à haut pouvoir de dissipation thermique présentant des applications dans plusieurs secteurs de l'industrie électronique, parmi lesquels on peut citer les substrats pour hybrides de puissance, les boîtiers pour circuits à très grande intégration (VLSI) et les substrats multicouches, les modules pour semi-conducteurs de puissance, les boîtiers et substrats pour transistors hyperfréquences de puissance et les fenêtres de tubes hyperfréquences.

Ainsi, pour les hybrides de puissance, le matériau céramique de l'invention constitue un substrat à forte dissipation thermique, permettant de simplifier considérablement les assemblages qui sont nécessaires dans cette technologie ; dans les boîtiers pour VLSI (puces de grandes dimensions proposant des problèmes de report et de dissipation) et les substrats multicouches, ce nouveau matériau permet une augmentation de la densité d'intégration des composants électroniques ; dans le cas des modules pour semi-conducteurs de puissance, le matériau de l'invention constitue un matériau de substrat approprié, associant la conduction thermique et l'isolation électrique, les modules devant fonctionner dans une gamme de puissance moyenne (10 A à 100 A, avec une tenue en tension de 1000 à 2000 V) et trouvant des applications notamment pour le chauffage électrique domestique, la variation de vitesse de petits moteurs (machines à laver, sèche-linge), dans les domaines de la climatisation, de l'automobile etc... ; quant aux boîtiers et substrats pour hyperfréquences de puissance, on peut citer les boîtiers pour transistors FET de puissance, les MIC contenant des composants de puissance dans lesquels le matériau céramique de l'invention peut remplacer à moindre coût l'oxyde de béryllium ; dans les fenêtres de tubes hyperfréquences, pour lesquelles on utilise généralement l'alumine refroidie à l'eau, on pourra avantageusement utiliser le matériau de l'invention qui peut supporter l'échauffement et les contraintes dues aux pertes diélectriques.

On peut mentionner, comme autres utilisations du matériau céramique de l'invention, les gaines pour capteurs de températures, etc ...

Enfin, l'invention concerne l'utilisation du matériau céramique qui en fait l'objet comme matériau permettant une évacuation de calories, par exemple, dans les applications suivantes :
- manipulation des métaux chauds
- creusets pour métaux fondus
- creusets pour semi-conducteurs fondus.

Pour mieux illustrer la présente invention, on a fabriqué différents matériaux céramiques répondant à la définition de l'invention (exemples 1 à 7 ci-après) et on a évalué leurs caractéristiques d'usage les plus importantes. Une comparaison a également été faite avec des matériaux céramiques ne comportant pas de SiC, mais présentant la même composition de base AlN-$Y_2O_3$ (Exemples comparatifs A, B et C).

## CARACTERISTIQUES DES POUDRES UTILISEES

On a utilisé les poudres suivantes :
  a) Nitrure d'aluminium
Surface spécifique au BET : 5 à 8 $m^2/g$ ;
Taille moyenne des particules : 0,8 - 1,3 $\mu m$ (les plus grosses étant inférieures à 25 $\mu m$) ;
Impuretés : O : 2,5% maximum ; C : 0,15% ;
Fe : 0,1% ; autres : 0,1%
  b) Carbure de silicium
Surface spécifique : 15 $\pm$ 1 $m^2/g$ ;
Taille moyenne des particules : 0,8 $\mu m$ (les plus grosses étant inférieures à 4 $\mu m$) ;
Impuretés : C : 0,39% ; Si : 0,12% ; O : 0,81% ; autres : 0,2%
  c) Oxyde d'yttrium
Taille moyenne des particules : 4 $\mu m$
Pur à 99,99%

## MODE OPERATOIRE GENERAL DE FABRICATION DES MATERIAUX CERAMIQUES

On a mélangé, dans un milieu alcoolique constitué par du propanol-2, x% de nitrure d'aluminium + (100 - x)% d'oxyde d'yttrium, et on a ajouté, le cas échéant, y% de carbure de silicium, sur la base AlN + $Y_2O_3$. Un liant constitué par une solution aqueuse d'éthylcellulose à 2,5 % d'extrait sec a été incorporé à raison de 2% en poids.

On a séché la composition résultante, soit à l'étuve soit à l'évaporateur rotatif, à une température de 100°C. On a réalisé un tamisage sur un tamis de 325 $\mu m$ d'ouverture de maille.

Ensuite, on a effectué un compactage de mise en forme à une pression de 100 MPa.

On a ensuite réalisé un frittage à 1800°C pendant 1 heure, sous une pression d'azote de 0,1 MPa dans un lit de poudre de nitrure d'alumium (Exemples 1 à 7).

Les caractéristiques thermiques, électriques et mécaniques qui ont été mesurées sont rapportées soit dans le Tableau suivant pour les différents exemples réalisés, soit après ce Tableau, sous formes de valeurs moyennes ou de plages de valeurs.

TABLEAU

| Exemples | Mélange de base | | | d (%) | Diffusivité (m²/s) ** | Conductivité thermique (W/m·K) | Résistivité Ω.cm | Constante diélectrique ε | Tangente δ à 1 MHz |
|---|---|---|---|---|---|---|---|---|---|
| | AlN x | Y₂O₃ (100-x) | SiC y | | | | | | |
| A | 98 | 2 | | 100 | $3,23 \times 10^{-5}$ | 94,5 | $1,75 \times 10^{12}$ | 3,74 | $7 \times 10^{-4}$ |
| 1 | 98 | 2 | 0,1 | 100 | $3,4 \times 10^{-5}$ | 99,5 | $1,87 \times 10^{12}$ | 12,18 | |
| B | 90 | 10 | | 100 | $4,23 \times 10^{-5}$ | 127,2 | $5,64 \times 10^{12}$ | 5,35 | $3 \times 10^{-4}$ |
| 2 | 90 | 10 | 0,05 | 99 | $4,85 \times 10^{-5}$ | 145,8 | $3,33 \times 10^{12}$ | 12 | $36 \times 10^{-4}$ |
| 3 | 90 | 10 | 0,1 | 98 | $4,8 \times 10^{-5}$ | 144,3 | $9,15 \times 10^{9}$ | 5,37 | $5 \times 10^{-4}$ |
| 4 | 90 | 10 | 1 | 96,3 | $4,7 \times 10^{-5}$ | 141,3 | $5,9 \times 10^{11}$ | 10,94 | $11 \times 10^{-4}$ |
| 5 | 90 | 10 | 2 | 96 | $4,68 \times 10^{-5}$ | 140,7 | $4,96 \times 10^{11}$ | 29 | $6 \times 10^{-4}$ |
| 6 | 90 | 10 | 5 | 95,5 | $2,57 \times 10^{-5}$ | 77,3 | $6,27 \times 10^{10}$ | 11 | $437 \times 10^{-4}$ |
| C | 95 | 5 | | 100 | $1,64 \times 10^{-5}$ | 48,4 | $4 \times 10^{12}$ | 10,71 | $28 \times 10^{-4}$ |
| 7 | 95 | 5 | 0,1 | 99 | $2,68 \times 10^{-5}$ | 79,2 | $3,54 \times 10^{11}$ | 11,8 | $11 \times 10^{-4}$ |

* d = densité relative par rapport à la densité théorique calculée d'après la règle des mélanges.

** : mesurée suivant la méthode Flash-Laser

La chaleur spécifique moyenne de ces échantillons était 980 J/kg °K.

La résistance mécanique à la flexion de ces échantillons était de l'ordre de 350 MPa.

La ténacité K1c va de 2,7 MPa m$^{0,5}$ à 3,1 MPa m$^{0,5}$ pour des ajouts en Y₂O₃ allant respectivement de 10% à 2%.

Sur la figure unique du dessin annexé, on représenté la courbe de conductivité thermique en fonction du pourcentage de SiC par rapport à une base AlN + Y₂O₃ (90/10), à partir des valeurs concernant l'Exemple Comparatif B et les Exemples 2 à 6, une échelle logarithmique ayant été utilisée pour porter les valeurs en abscisses. On constate, dans ce cas, une augmentation de la conductivité thermique pour toutes valeurs du % de SiC ajouté jusqu'à la valeur de 3% environ. Cette augmentation est significative pour le domaine des applications envisagées en industrie électronique.

**Revendications**

1 - Composition utilisable pour la fabrication d'un matériau céramique à haute conductivité thermique, constituée essentiellement par un mélange intime de poudres, qui comprend, pour 100 parties en poids :

- du nitrure d'aluminium à raison de 85 à 99,5 parties en poids ; et

- au moins un additif de frittage choisi parmi les oxydes de terres rares et de métaux alcalino-terreux et les substances fournissant de tels oxydes par décomposition thermique, ce (ou ces) additif(s) étant présent(s) à raison de 0,5 à 15 parties en poids d'équivalents en oxydes,

ledit mélange refermant en outre, pour 100 parties en poids, une quantité de carbure de silicium inférieure à 3 parties en poids, la conductivité thermique du matériau céramique fabriqué à partir de ladite composition étant au moins égale à 130 W/m·K.

2 - Composition selon la revendication 1, caractérisée par le fait que le carbure de silicium est présent à raison de 0,05 à 2 parties en poids pour 100 parties en poids du mélange de base.

3 - Composition selon l'une des revendications 1 et 2, caractérisée par le fait que l'additif de frittage est l'oxyde d'yttrium.

4 - Procédé pour la fabrication d'un matériau céramique à partir de la composition telle que définie à l'une des revendications 1 à 3, caractérisé par le fait qu'il consiste :
- à préparer un mélange intime de poudres de départ de la composition susindiquée, dans un milieu de suspension liquide organique compatible avec ces poudres, en faisant suivre, le cas échéant, par un séchage ;
- à réaliser une mise en forme de ce mélange, alors qu'il se trouve à l'état de suspension ou bien d'extrait sec ; et
- à soumettre à une cuisson le mélange ainsi mis en forme, dans une atmosphère protectrice empêchant la décomposition du nitrure d'aluminium, à une température capable de provoquer le frittage des poudres de la composition pour donner produit homogène résistant.

5 - Procédé selon la revendication 4, caractérisé par le fait qu'à la première étape, on incorpore au mélange de la composition pulvérulente et du milieu de suspension, un liant soluble dans ledit milieu de suspension et capable de subir une décomposition thermique ultérieure, notamment lors du frittage, sans laisser de résidu.

6 - Procédé selon la revendication 5, caractérisé par le fait qu'on choisit le liant parmi l'éthylcellulose, l'alcool polyvinylique, les résines acryliques et le polyéthylèneglycol.

7 - Procédé selon l'une des revendications 4 à 6, caractérisé par le fait qu'on choisit le milieu de suspension parmi les alcools et l'acétone.

8 - Procédé selon l'une des revendications 4 à 7, caractérisé par le fait qu'on effectue le frittage à une température de l'ordre de 1750°C à 2000°C, pendant environ 1 heure.

9 - Procédé selon l'une des revendications 4 à 8, caractérisé par le fait qu'on effectue l'opération de frittage dans un lit de poudre protecteur en atmosphère azotée, constituant ainsi l'atmosphère protectrice empêchant la décomposition du nitrure d'aluminium.

10 - Procédé selon l'une des revendications 4 à 8, caractérisé par le fait qu'on effectue l'opération de frittage sous une pression d'azote pouvant atteindre quelques mégapascals, constituant ainsi l'atmosphère protectrice empêchant la décomposition du nitrure d'aluminium.

11 - Matériau céramique obtenu à partir de la composition telle que définie à l'une des revendications 1 à 3, ou obtenu par le procédé tel que défini à l'une des revendications 4 à 10, et présentant une conductivité thermique au moins égale à 130 W/m·K.

12 - Utilisation du matériau céramique tel que défini à la revendication 11 dans l'industrie électronique, pour l'encapsulation de circuits intégrés et comme substrats de support pour les circuits intégrés, en particulier comme substrats pour hybrides de puissance, boîtiers pour circuits à très grande intégration (VLSI) et substrats multicouches, modules pour semi-conducteurs de puissance, boîtiers et substrats pour transistors hyperfréquences de puissance et fenêtres de tubes hyperfréquences.

13 - Utilisation du matériau céramique tel que défini à la revendication 11, comme matériau permettant une évacuation de calories.

FIGURE UNIQUE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 833 389 (K. KOMEYA et al.) * exemple 1; table 1; colonne 2, lignes 10-13 * | 1-3 | C 04 B 35/58 |
| A | * exemple 1; table 1; colonne 2, lignes 6-13, 38-52 * --- | 4, 8, 10 | |
| X | EP-A-0 080 213 (TOKYO SHIBAURA DENKI K.K.) * revendications 1-6 * | 1, 2 | |
| A | * revendications 1-6; page 1, lignes 6-10; page 2, lignes 17-25 - page 4, ligne 21 - page 5, ligne 22; page 8, lignes 1-14 * --- | 4, 5, 8, 10, 12 | |
| X | EP-A-0 212 659 (TOSHIBA) * revendications 1-5 * --- | 1-3 | |
| D,A | EP-A-0 180 724 (TOSHIBA) * revendications 1, 2 * --- | 1 | |
| P,X | EP-A-0 276 149 (KERAMONT ADVANCED CERAMIC PRODUCTS CORP.) * revendications 1, 5, 6, 9; exemples 5, 6; colonne 2, lignes 41-45 * --- | 1-3, 11 | DOMAINES TECHNIQUES RECHERCHES (Int. Cl.4) |
| P,A | PATENT ABSTRACTS OF JAPAN vol. 11, no. 267, page (C-443)(2714), le 28 Août 1987; & JP - A - 62 070 210 ( NATL. INST. FOR RES. IN INORG. MATER) 31.03.1987 (Cat. A) ----- | 1 | C 04 B 35/58 |

Le présent rapport a été établi pour toutes les revendications

| Lieu de la recherche | Date d'achèvement de la recherche | Examinateur |
|---|---|---|
| BERLIN | 16-12-1988 | STROUD J.G. |

EPO FORM 1503 03.82 (P0402)